# EUROPEAN PATENT SPECIFICATION

(11) **EP 3 181 654 B1**
(45) Date of publication and mention of the grant of the patent: **02.10.2019**
(21) Application number: 15290317.5
(22) Date of filing: 15.12.2015
(51) Int. Cl.: C09K 8/467

(54) **COMPOSITONS AND METHODS FOR REDUCING AIR ENTRAINEMENT IN WELL CEMENT SLURRIES**
ZUSAMMENSETZUNGEN UND VERFAHREN ZUR REDUZIERUNG DES LUFTEINTRAGS IN TIEFBOHRZEMENTSCHLÄMMEN
COMPOSITIONS ET PROCÉDÉS POUR RÉDUIRE L'ENTRAÎNEMENT DE L'AIR DANS DES PUITS DE COULIS DE CIMENT

(43) Date of publication of application: 21.06.2017
(73) Proprietor: Services Pétroliers Schlumberger, 75007 Paris (FR); Schlumberger Holdings Limited, Road Town, Tortola (VG); SCHLUMBERGER TECHNOLOGY B.V., 2514 JG The Hague (NL)
(72) Inventor: Carelli, Clara, 92140 Clamart (FR); Le Roy-Delage, Sylvaine, 92140 Clamart (FR); Piot, Bernard, 92140 Clamart (FR)
(74) Representative: Schlumberger Intellectual Property Department

(56) References cited:
- EP-A1- 2 363 428
- WO-A1-2013/055843
- US-A1- 2009 075 848

## Description

### BACKGROUND

The statements in this section merely provide background information related to the present disclosure and may not constitute prior art.

This disclosure relates to cement compositions and methods for designing the compositions.

During the construction of subterranean wells, it is common, during and after drilling, to place a tubular body in the wellbore. The tubular body may comprise drillpipe, casing, liner, coiled tubing or combinations thereof. The purpose of the tubular body is to act as a conduit through which desirable fluids from the well may travel and be collected, or fluids may be injected into the well. The tubular body is normally secured in the well by a cement sheath.

The cement sheath is placed in the annular region between the outside of the tubular body and the subterranean borehole wall by pumping the cement slurry down the interior of the tubular body, which in turn exits the bottom of the tubular body and travels up into the annulus. The cement slurry may also be placed by the "reverse cementing" method, whereby the slurry is pumped directly down into the annular space.

The cement sheath provides mechanical support and hydraulic isolation between the zones or layers that the well penetrates. The latter function is prevents hydraulic communication between zones that may result in contamination. For example, the cement sheath blocks fluids from oil or gas zones from entering the water table and contacting drinking water. In addition, to optimize a well's production efficiency, it may be desirable to isolate, for example, a gas-producing zone from on oil-producing zone. The cement sheath achieves hydraulic isolation because of its low permeability. In addition, intimate bonding between the cement sheath and both the tubular body and borehole prevents leaks.

Cement slurry preparation may be performed by either batch mixing or continuous mixing. During batch mixing, the cement slurry ingredients arc combined in a tank that provides sufficient agitation to form a homogenous mixture. The tank may be sufficiently large to accommodate the entire sluny volume to be placed in the well, or the required slurry volume may be prepared in more than one tank. Continuous (or "on-the-fly") mixing is a process during which the liquid and solid components of the slurry arc combined and exposed to a high-shear environment to form a homogeneous mixture. The slurry is immediately pumped into the well. Thus, the slurry is formed at a rate equal to the pumping rate. Continuous mixing is logistically advantageous because less time is required to prepare the slurry, and the process avoids the preparation of an excess slurry volume that the operator would have to dispose of.

The intense shear environment associated with continuous mixing may cause air entrainment and slurry foaming. A jet mixer may be used in which a regulated flow of solids into the mixer is obtained by creating a void that sucks the dry powder into the mixing fluid stream by the venturi effect. Any air entrainment should be removed before the slurry is pumped downhole. Excessive slurry foaming may have several undesirable consequences. Slurry gelation may result, and loss of hydraulic pressure during pumping may occur owing to cavitation in the mixing system. In addition, air entrainment may cause higher-than-desired slurry densities. During slurry mixing a densitometer is used to help field personnel proportion the ingredients. If air is present in the slurry at the surface, the density of the system "cement + water + air" is measured. Because the air becomes compressed downhole, the densitometer may underestimate the true downhole slurry density. More information concerning cement slurry mixing in the context of well cementing may be found in the following publication. Leugemors E. Metson J, Pessin J-L, Colvard RL, Krauss CD and Plante M: "Cementing Equipment and Casing Hardware," in Nelson EB and Guillot D (eds.): Well Cementing-2nd Edition, Houston, Schlumberger (2006) 343-362.

To minimize air entrainment and foaming, antifoam agents may be added to the mixing fluid or dry blended with the cement solids. Antifoam agents produce a shift in surface tension, alter the dispersibility of solids, or both, so that the conditions required to produce a foam are no longer present

In well cementing, two classes of antifoam agents are commonly used: polyglycol ethers and silicones. In current practice one type of antifoam agent is used (i.e., either polyglycol ethers or silicones) in a particular cement slurry. Very small concentrations may achieve adequate foam prevention, often lower than 0.1% by weight of water (BWOW). Indeed, untifoam agents tend to be used sparingly, not only for economic reasons, but also because adding excessive amounts of antifoam agents may actually stabilize a foam and make the problem worse.

Polypropylene glycol (PPG) is most frequently used because of its lower cost and effectiveness in most situations; however, optimal results are obtained when PPG is added to the system before mixing. The silicones are highly effective antifoaming and defoaming agents. They are often suspensions of finely divided silica particles dispersed in polydimethylsiloxane or similar silicones. Unlike the polyglycol ethers, silicones can destroy a foam regardless of when they are added to the system.

In recent years, new cementing technologies have been introduced wherein high concentrations of organic polymer particles are present in cement slurries. Such particles may be used to impart set cement flexibility. Or, the particles may be used to form so-called self-healing cements. Various organic polymers may swell in the presence of wellbore fluids such as hydrocarbons, carbon dioxide or hydrogen sulfide. If the cement sheath fails during the well's lifetime, polymer swelling upon exposure to one or more of the wellbore fluids may seal cracks or voids in the cement sheath, thereby restoring zonal isolation.

Many of the organic polymers arc hydrophobic and may be difficult to incorporate in the cement slurry during continuous mixing. This may cause excessive air entrainment. This problem may be further exacerbated by the presence of latexes that are used to prevent wellbore problems such as annular fluid migration. Also, water soluble polymers may be added to impart fluid-loss control. Such additives may increase mixing fluid viscosity, favoring the creation of more stable foams.

To further minimize the air entrainment and foaming problems, new cementing equipment has been developed. For example, the Slurry Air Separator (SAS), developed by Schlumberger, uses the hydrocyclone principle to separate entrained air from the cement slurry during the mixing process. Nevertheless, when high concentrations of hydrophobic particles are present, mixing difficulties may still persist. Under these circumstances it may not be possible to perform continuous mixing at a reasonable rate.

Another difficulty is that such mixing problems may not be identified during laboratory tests. Most practitioners employ a recommended mixing procedure published by the American Petroleum Institute. Recommended Practice for Testing Well Cements. American Petroleum Institute Publication 10B-2, 2nd Edition, July 2013. Applicant has found this method unable to reliably identify foaming and air entrainment problems when mixing slurries containing high concentrations of hydrophobic particles.

EP2363428 discloses rheology modifiers including anti-foaming agents for cement slurries for application in well-cementing operations.

### SUMMARY

In an aspect, embodiments relate to well cementing compositions. The compositions comprise an aqueous fluid, a solid blend comprising portland cement and an air entrainment suppressing agent that comprises a blend of a silicone and a polypropylene glycol, or a silicone that is functionalized with ether groups and hydrophobic particles as defined by the claims.

In a further aspect, embodiments relate to methods for preparing a well cementing composition as defined by the claims. An air entrainment suppressing agent is added to an aqueous fluid, thereby forming a mixing fluid. The air entrainment suppressing agent comprises a blend of a silicone and polypropylene glycol, or a silicone that is functionalized with ether groups. The mixing fluid is combined with a solid blend comprising portland cement in a continuous process, thereby forming a slurry.

Methods for cementing a subterranean well are shown. An air entrainment suppressing agent is added to an aqueous fluid, thereby forming a mixing fluid. The air entrainment suppressing agent comprises a blend of a silicone and polypropylene glycol, or a silicone that is functionalized with ether groups. The mixing fluid is combined with a solid blend comprising portland cement in a continuous process, thereby forming a slurry. The slurry is then placed in the well.

Methods for measuring air entrainment in a composition. are shown. A rotational blade mixer with a container is provided. An air entrainment suppressing agent is added to an aqueous fluid, thereby forming a mixing fluid with a known density and volume. The mixing fluid is placed in the container. A first rotational speed is chosen that is between 2000 and 12,000 RPM. The mixer is operated for a time period sufficient to expose the mixing fluid to at least 30.000 blade revolutions. Then, maintaining the first rotational speed, a solid blend comprising portland cement is placed in the container. The blend has a known density and absolute volume. The time required for the blend to be dispersed homogeneously in the mixing fluid is recorded. The mixer is then operated for 35 seconds at a second rotational speed of 12,000 RPM, thereby forming a slurry. Within one minute after the slurry has been formed, a slurry density measurement is performed with a mud balance at atmospheric pressure. The measured slurry density is then compared with a theoretical slurry density calculated from the known densities and volumes of the mixing fluid and solid blend.

This summary is provided to introduce a selection of concepts that are further described below in the detailed description.

### DETAILED DESCRIPTION

In the following description, numerous details are set forth to provide an understanding of the present disclosure.

In this disclosure, Applicant discloses improved air entrainment suppressing agents that arc particularly useful when preparing cement slurries that contain high concentrations of hydrophobic particles. The air entrainment suppressing agents may comprise a blend of a silicone and propylene glycol, or a silicone that is funcfionalized with ether groups. The functionalized silicones may have a linear structure 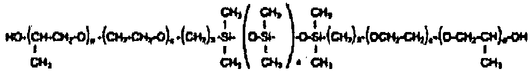 or a branched structure 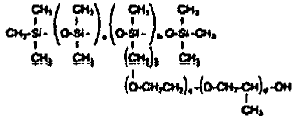 The ether groups may be characterized as a group (OC₃H₆)_{b}(OC₂H₄)ₐO(CH₂)_{c}, wherein a has a mean value between 0 and 16, b has a mean value between 0 and 12 and c is a number between 1 and 6, provided that a + b ≥ 1. The group may be grafted on the silicone backbone chain or used as mono- or di-terminal groups.

For each aspect, the aqueous fluid may be fresh water, tap water, sea water, produced water or brines.

For each aspect, the silicone/propylene glycol blend may be present at a weight ratio between 80% silicone/20% polypropylene glycol and 20% silicone/80% polypropylene glycol. The polypropylene glycol may have a molecular weight between 1000 g/mol and 4000 g/mol, or between 2000 g/mol and 4000 g/mol. The silicone/polypropylene blend may be present in the composition at a concentration between 4 L/tonne of solids in the composition and 40 L/tonne of solids in the composition, or between 10 L/tonne of solids in the composition and 30 L/tonne of solids in the composition. In this disclosure the solids in the composition may also be referred to as the "blend."

For each aspect, the functionalized silicone may be present at a concentration between 2 L/tonne of blend and 35 L/tonne of blend, or between 6 L/tonne of blend and 25 L/tonne of blend.

For each aspect, the composition may further comprise latexes or water soluble polymers or combinations thereof.

For each aspect, the hydrophobic particles comprise one or more members selected from the group consisting of rubber particles, polyamides, polypropylene, acrylonitrile butadiene rubbers, polyethylene, styrene butadiene, uintaite (also known by the commercial name GILSONITE), styrene isoprene styrene (SIS) rubber, styrene isoprene copolymers, styrene butadiene styrene (SBS) rubber, styrene divinylbenzene, fluoroelastomers, perfluoroclastomers, polyphenylene sulfide, polyether-etherketones, petroleum coke derivatives and coal. The hydrophobic particles may be present in a particle size range between 1 and 2000 micrometers, or between 50 and 1000 micrometers or between 80 and 850 micrometers. The hydrophobic particles may be present at a concentration between 10% by volume of blend (BVOB) and 55% BVOB, or between 15% BVOB and 40% BVOB. The hydrophobic particles may present in granular or fibrous form, or both.

For each aspect, the latexes may comprise styrene butadiene latexes, carboxylated styrene butadiene latexes, styrene acrylic latexes, acrylic latexes, isoprene latexes or natural rubber latexes or combinations thereof. The latexes may be present in the composition at concentrations between 35 and 500 L/tonne of blend, or between 80 and 350 L/tonne of blend, or between 80 and 300 L/tonne of blend.

For each aspect, the water soluble polymers may comprise cellulosic ethers, acrylates, polymers containing 2-acrylamido-2-methylpropane sulfonic acid (AMPS) and acrylamides. polysaccharides, polyvinyl alcohols, or crosslinked polyvinyl alcohols or combinations thereof. The polymers may be present in the composition at concentrations between 0.01% and 2.0% by weight of solids (BWOS), or between 0.015% and 1.5% BWOS, or between 0.02% and 1.3% BWOS.

For cementing a subterrancan well, the slurry may be placed in the well during a primary cementing of a remedial cementing operation.

For the method for measuring air entrainment in a composition, the rotational blade mixer has a capacity of about one liter. Commercial examples of such mixers are WARING blenders (available from Conair Corporation, Stamford, CT) and the Model 3260 Constant Speed Mixer (available from Chandler Engineering, Broken Arrow, OK).

For the method for measuring air entrainment in a composition, solid blend may be added to the container within a time period shorter than 2 minutes or shorter than 1 minute. The time period is defined as the time necessary for the solids to be poured into the container and integrated within the liquid phase. In other words, no dry solids or lumps should be observed in the slurry after the time period. Time periods longer than two minutes are possible but not considered by Applicant to be a successful result.

For the method for measuring air entrainment in a composition, the mud balance may be an atmospheric mud balance or a pressurized mud balance.

For each aspect, the composition may further comprise extenders, weighting agents, lost-circulation materials, fibers, dispersants, fluid-loss additives, antifoam agents, strength retrogression prevention additives, gas migration control agents, surfactants and gas generating agents.

The foregoing is further illustrated by reference to the following examples, which are presented for purposes of illustration and are not intended to limit the scope of the present disclosure.

### EXAMPLES

Cement slurries were prepared and tested according to the method described herein by Applicant, which differs from the recommended procedure published by the American Petroleum Institute (API RP10B). The API procedure specifies operating the mixer at 4000 RPM while the solids are added to the container, then increasing the speed to 12,000 RPM for 35 seconds. The mixing device was a Model 3260 Constant Speed Mixer. Unless indicated otherwise, the cement used in the examples was Dyckcrhoff Class G. The cement slurries were prepared with tap water.

In these examples, Applicant chose an initial rotational speed of 4000 RPM and stirred the mixing fluid in the container for a time period of 10 minutes, thereby exposing the mixing fluid to 40,000 blade revolutions. Then, the mixing speed was increased to 12,000 RPM for 35 seconds.

### EXAMPLE 1

A test cement design (Flex 1) is shown in Table 1.

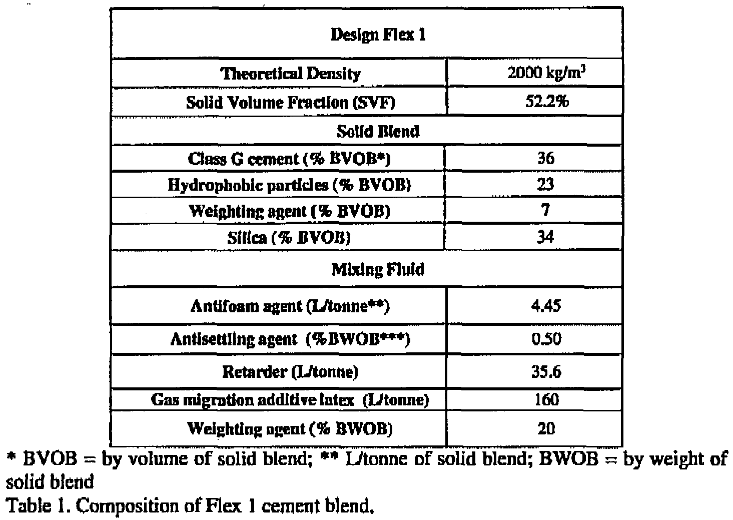

In the Flex 1 blend, the hydrophobic particles were composed of acrylonitrile-butadiene rubber, present at a particle size range between 100 micrometers and 600 micrometers. Silica as a strength retrogression prevention agent was present in the form of both coarse crystalline particles having a particle size between 30 micrometers and 250 micrometers, and microfine amorphous particles having a particle size between 0.1 and 5.0 micrometers. The weight ratio of coarse to microfine silica was 2:1. The antifoam agent was a silicone or polypropylene glycol or both. The antifoam agent concentration was held constant at 4.45 L/tonne. The antisettling agent was a saccharide biopolymer. The retarder was a lignosulfonate. The gas migration additive latex was styrene butadiene latex. The weighting agent was Mn₃O₄, also known as the mineral hausmannite. With regard to the solid blend, a skilled person will appreciate that the foaming problem arises from the presence of the hydrophobic particles. The composition and particle size distribution of the cement and other solid additives have a lesser role in the context of foaming.

The results of a series of mixing tests are shown in Table 2. The blend addition time is listed as well as the slurry density measured with an atmospheric mud balance.

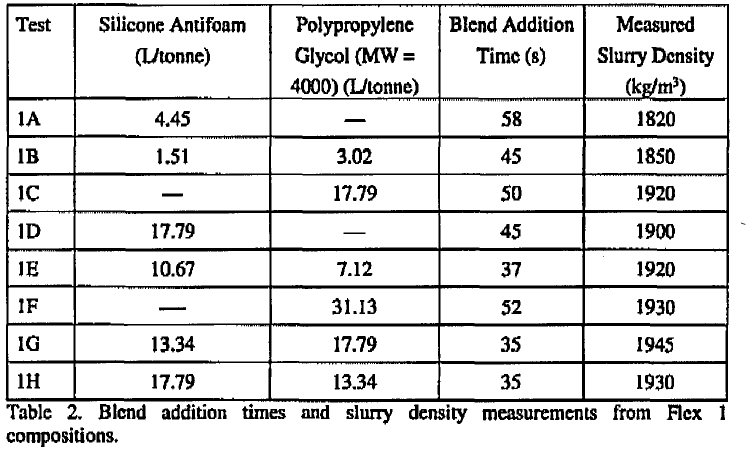

The results show that high concentrations of both antifoam agents were required to achieve a slurry density improvement. None of the compositions was able to achieve a slurry density equal to the theoretical slurry density of 2000 kg/m³. Nevertheless, these tests confirm a synergistic effect when both antifoam agents are present.

A comparative test was also performed wherein the standard API mixing procedure was employed. The measured slurry density after mixing was 1990 kg/m³. Thus, the standard API mixing procedure did not detect the foaming problem.

### EXAMPLE 2

Two test designs (Flex 2 and Flex 3) are shown in Table 3.

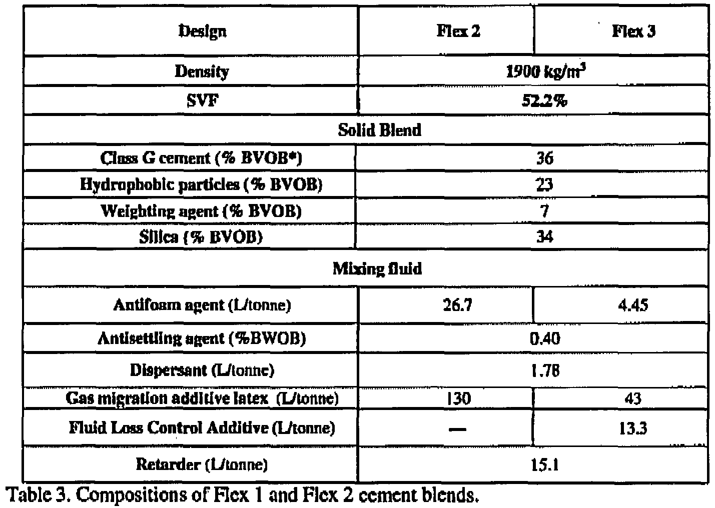

The solid blends for Flex 2 and Flex 3 were the same as that of Flex 1 in Example 1: however, the mixing fluid compositions were different. The dispersant and retarder were based on lignosulfonates, and the fluid loss control additive was an AMPS/acrylamide copolymer.

The results of a series of mixing tests with the Flex 2 composition are shown in Table 4.

**Table 4. Blend addition times and slurry density measurements from Flex 2 compositions.**

| Test | Silicone Antifoam (L/tonne) | Polypropylene Glycol (MW = 4000) (L/tonne) | Blend Addition Time (s) | Measured Slurry Density (kg/m³) |
|---|---|---|---|---|
| 2A | 26.7 | - | 59 | 1780 |
| 2B | - | 26.7 | 55 | 1840 |
| 2C | 13.35 | 13.35 | 50 | 1850 |

In Tests 2A-2C, the total antifoam concentration was held constant at 26.7 L/tonne. As observed in Example 1, the combination of silicone and glycol antifoams was synergistic in terms of the blend addition time and the measured slurry density. A comparative test was performed using the API mixing procedure. The measured slurry density was 1860 kg/m³.

The results of a series of mixing tests with the Flex 3 composition are shown in Table 5.

**Table 5. Blend addition times and slurry density measurements from Flex 3 compositions.**

| Test | Silicone Antifoam (L/tonne) | Polypropylene glycol (L/tonne) | Blend Addition time (s) | Measured Slurry Density (kg/m³) |
|---|---|---|---|---|
| 2D | 4.45 | - | 74 | 1810 |
| 2E | - | 4.45 | 70 | 1850 |
| 2F | 1.51 | 2.94 | 56 | 1860 |

In Tests 2D-2F, the total antifoam concentration was held constant at 4.45 L/tonne. As observed in Example 1, the combination of silicone and glycol antifoams was synergistic in terms of the blend addition time and the measured slurry density.

### EXAMPLE 3

In this Example, solid blend composition of Flex I was tested again; however, the antifoam system consisted of two silicones. One silicone was the same as that used in the previous examples: the other was an ether functionalized silicone antifoam (AGOCHEM AF 520, available from CHT Bezema, Tübingen, Germany). The antifoam compositions and test results are presented in Table 6.

**Table 6. Blend addition times and slurry density measurements from Flex I compositions containing two different silicone antifoam agents.**

| Test | Silicone Antifoam (L/tonne) | AGOCHEM AF520 (L/tonne) | Blend Addition Time (s) | Measured Slurry Density (kg/m³) |
|---|---|---|---|---|
| 3A | 4.45 | - | 58 | 1820 |
| 3B | 17.8 | - | 45 | 1900 |
| 3C | - | 8.9 | 30 | 1930 |
| 3D | - | 13.3 | 32 | 1940 |
| 3E | - | 17.8 | 35 | 1940 |
| 3F | - | 20.5 | 30 | 1960 |

The results indicate that the functionalized silicone antifoam is more effective than one used previously, both in terms of blend addition time and measured slurry density. The results also show how the disclosed mixing method can be used to identify the optimal antifoam concentration.

### EXAMPLE 4

In this Example, a silicone antifoam was tested in combination with polypropylene glycols with various molecular weights. The tests were performed with the Flex 2 slurry composition described earlier. However, the cement was Cemoil Class G instead of Dyckerhoff Class G. The results are presented in Table 7.

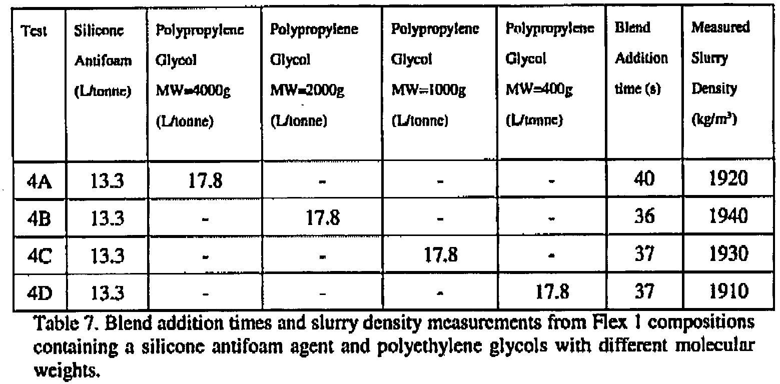

The least foaming was obtained with the polyethylene glycol that had a molecular weight of 2000 g/mol. The 400 g/mol polyethylene glycol was the least effective.

Although only a few example embodiments have been described in detail above, those skilled in the art will readily appreciate that many modifications are possible in the example embodiments without materially departing from this disclosure. Accordingly, all such modifications arc intended to be included within the scope of this disclosure as defined in the following claims.

## Claims

1. A well cementing composition, comprising:
(i) an aqueous fluid;
(ii) a solid blend comprising portland cement;
(iii) an air entrainment suppressing agent comprising a blend of a silicone and polypropylene glycol, or a silicone that is functionalized with ether groups; and
(iv) hydrophobic particles comprising one or more members selected from the list consisting of rubber particles, polyamides, polypropylene, acrylonitrile butadiene rubbers, polyethylene, styrene butadiene, uintaite, styrene isoprene styrene (SIS) rubber, styrene isoprene copolymers, styrene butadiene styrene (SBS) rubber, styrene divinylbenzene, fluoroelastomers, perfluoroelastomers, polyphenylene sulfide, polyether-etherketone, petroleum coke derivatives and coal.

2. The composition of claim 1, wherein the silicone/polypropylene glycol blend is present at a weight ratio between 80% silicone/20% polypropylene glycol and 20% silicone/80% polypropylene glycol.

3. The composition of claim 1 or 2, wherein the polypropylene glycol has a molecular weight between 1000 g/mol and 4000 g/mol.

4. The composition of any one of claims 1-3, wherein the silicone/polypropylene glycol blend is present at a concentration between 4 L/tonne of blend and 40 L/tonne of blend.

5. The composition of any one of claims 1-4, wherein the functionalized silicone is present at a concentration between 2 L/tonne of blend and 35 L/tonne of blend.

6. The composition of any one of claims 1-5, further comprising latexes or water soluble polymers or combinations thereof.

7. The composition of claim 6, wherein the latexes comprise styrene butadiene latexes, carboxylated styrene butadiene latexes, styrene acrylic latexes, acrylic latexes, isoprene latexes or natural rubber latexes or combinations thereof.

8. The composition of claim 6, wherein the water soluble polymers comprise cellulosic ethers, acrylates, polymers containing 2-acrylamido-2-methylpropane sulfonic acid and acrylamides , polysaccharides, polyvinyl alcohols, or crosslinked polyvinyl alcohols or combinations thereof.

9. A method for preparing a well cementing composition, comprising:
(i) adding an air entrainment suppressing agent to an aqueous fluid, the agent comprising a blend of a silicone and polypropylene glycol, or a silicone that is functionalized with ether groups, thereby forming a mixing fluid;
(ii) combining the mixing fluid with a solid blend comprising portland cement in a continuous process, thereby forming a slurry, wherein the well cementing composition further comprises hydrophobic particles comprising one or more members selected from the list consisting of rubber particles, polyamides, polypropylene, acrylonitrile butadiene rubbers, polyethylene, styrene butadiene, uintaite, styrene isoprene styrene (SIS) rubber, styrene isoprene copolymers, styrene butadiene styrene (SBS) rubber, styrene divinylbenzene, fluoroelastomers, perfluoroelastomers, polyphenylene sulfide, polyether-etherketone, petroleum coke derivatives and coal.

10. The method of claim 9, wherein the silicone/polypropylene glycol blend is present at a weight ratio between 80% silicone/20% polypropylene glycol and 20% silicone/80% polypropylene glycol.

11. The method of claim 9 or 10, wherein the polypropylene glycol has a molecular weight between 1000 g/mol and 4000 g/mol.

12. The method of any one of claims 9-11, wherein the silicone/polypropylene glycol blend is present at a concentration between 4 L/tonne of blend and 40 L/tonne of blend.

13. The method of any one of claims 9-12, wherein the functionalized silicone is present at a concentration between 2 L/tonne of blend and 35 L/tonne of blend.

14. The method of any one of claims 9-13, wherein the composition further comprises latexes or water soluble polymers or combinations thereof.

## Patentansprüche

1. Bohrlochzementierungszusammensetzung, die umfasst:
(i) ein wässriges Fluid;
(ii) eine Portlandzement umfassende feste Mischung;
(iii) ein Luftporenunterdrückungsmittel, das eine Mischung aus einem Silikon und Polypropylenglykol oder ein mit Ethergruppen funktionalisiertes Silikon umfasst; und
(iv) hydrophobe Partikel, die einen oder mehr Bestandteile ausgewählt aus der Liste bestehend aus Kautschukpartikeln, Polyamiden, Polypropylen, Acrylnitril-Butadien-Kautschuken, Polyethylen, Styrol-Butadien, Uintait, Styrol-Isopren-Styrol-(SIS-)Kautschuk, Styrol-Isopren-Copolymeren, Styrol-Butadien-Styrol-(SBS-)Kautschuk, Styrol-Divinylbenzol, Fluorelastomeren, Perfluorelastomeren, Polyphenylensulfid, Polyetheretherketon, Petrolkoksderivaten und Kohle umfassen.

2. Zusammensetzung nach Anspruch 1, wobei die Silikon/Polypropylenglykol-Mischung in einem Gewichtsverhältnis zwischen 80% Silikon/20% Polypropylenglykol und 20% Silikon/80% Polypropylenglykol vorliegt.

3. Zusammensetzung nach Anspruch 1 oder 2, wobei das Polypropylenglykol ein Molekulargewicht zwischen 1000 g/mol und 4000 g/mol aufweist.

4. Zusammensetzung nach einem der Ansprüche 1-3, wobei die Silikon/Polypropylenglykol-Mischung in einer Konzentration zwischen 4 1/t Mischung und 40 1/t Mischung vorliegt.

5. Zusammensetzung nach einem der Ansprüche 1-4, wobei das funktionalisierte Silikon in einer Konzentration zwischen 2 1/t Mischung und 35 1/t Mischung vorliegt.

6. Zusammensetzung nach einem der Ansprüche 1-5, die ferner Latizes oder wasserlösliche Polymere oder Kombinationen davon umfasst.

7. Zusammensetzung nach Anspruch 6, wobei die Latizes Styrol-Butadien-Latizes, carboxylierte Styrol-Butadien-Latizes, Styrol-Acryl-Latizes, Acryl-Latizes, Isopren-Latizes oder Naturkautschuk-Latizes oder Kombinationen davon umfassen.

8. Zusammensetzung nach Anspruch 6, wobei die wasserlöslichen Polymere Celluloseether, Acrylate, Polymere enthaltend 2-Acrylamido-2-Methylpropansulfonsäure und Acrylamide, Polysaccharide, Polyvinylalkohole oder vernetzte Polyvinylalkohole oder Kombinationen davon umfassen.

9. Verfahren zum Herstellen einer Bohrlochzementierungszusammensetzung, das umfasst:
(i) Zugeben eines Luftporenunterdrückungsmittels zu einem wässrigen Fluid, wobei das Mittel eine Mischung aus einem Silikon und Polypropylenglykol oder ein mit Ethergruppen funktionalisiertes Silikon umfasst, wodurch ein Mischfluid ausgebildet wird;
(ii) Kombinieren des Mischfluids mit einer Portlandzement umfassenden festen Mischung in einem kontinuierlichen Prozess, wodurch eine Aufschlämmung ausgebildet wird, wobei die Bohrlochzementierungszusammensetzung ferner hydrophobe Partikel umfasst, die einen oder mehr Bestandteile ausgewählt aus der Liste bestehend aus Kautschukpartikeln, Polyamiden, Polypropylen, Acrylnitril-Butadien-Kautschuken, Polyethylen, Styrol-Butadien, Uintait, Styrol-Isopren-Styrol-(SIS-)Kautschuk, Styrol-Isopren-Copolymeren, Styrol-Butadien-Styrol-(SBS-)Kautschuk, Styrol-Divinylbenzol, Fluorelastomeren, Perfluorelastomeren, Polyphenylensulfid, Polyetheretherketon, Petrolkoksderivaten und Kohle umfassen.

10. Verfahren nach Anspruch 9, wobei die Silikon/Polypropylenglykol-Mischung in einem Gewichtsverhältnis zwischen 80% Silikon/20% Polypropylenglykol und 20% Silikon/80% Polypropylenglykol vorliegt.

11. Verfahren nach Anspruch 9 oder 10, wobei das Polypropylenglykol ein Molekulargewicht zwischen 1000 g/mol und 4000 g/mol aufweist.

12. Verfahren nach einem der Ansprüche 9-11, wobei die Silikon/Polypropylenglykol-Mischung in einer Konzentration zwischen 4 1/t Mischung und 40 1/t Mischung vorliegt.

13. Verfahren nach einem der Ansprüche 9-12, wobei das funktionalisierte Silikon in einer Konzentration zwischen 2 1/t Mischung und 35 1/t Mischung vorliegt.

14. Verfahren nach einem der Ansprüche 9-13, wobei die Zusammensetzung ferner Latizes oder wasserlösliche Polymere oder Kombinationen davon umfasst.

## Revendications

1. Composition de cimentation de puits, comprenant :
(i) un fluide aqueux;
(ii) un mélange solide comprenant du ciment de Portland ;
(iii) un agent supprimant l'entraînement d'air comprenant un mélange d'un silicone et de polypropylène glycol, ou un silicone qui est fonctionnalisé avec des groupes éther ; et
(iv) des particules hydrophobes comprennent un ou plusieurs éléments sélectionnés dans la liste constituée de particules de caoutchouc, de polyamides, de polypropylène, de caoutchoucs acrylonitrile-butadiène, de polyéthylène, de styrène butadiène, d'uintahite, de caoutchouc styrène-isoprène-styrène (SIS), de copolymères styrène-isoprène, de caoutchouc styrène-butadiène-styrène (SBS), de styrène divinylbenzène, de fluoroélastomères, de perfluoroélastomères, de sulfure de polyphénylène, de polyéther-éthercétone, de dérivés de coke de pétrole et de charbon.

2. Composition selon la revendication 1, dans laquelle le mélange silicone/polypropylène glycol est présent à un rapport de poids entre 80 % silicone / 20 % polypropylène glycol et 20 % silicone / 80 % polypropylène glycol.

3. Composition selon la revendication 1 ou 2, dans laquelle le polypropylène glycol présente un poids moléculaire entre 1 000 g/mol et 4 000 g/mol.

4. Composition selon l'une quelconque des revendications 1 à 3, dans laquelle le mélange silicone/polypropylène glycol est présent à une concentration comprise entre 4 I/tonne de mélange et 40 I/tonne de mélange.

5. Composition selon l'une quelconque des revendications 1 à 4, dans laquelle le silicone fonctionnalisé est présent à une concentration comprise entre 2 l/tonne de mélange et 35 l/tonne de mélange.

6. Composition selon l'une quelconque des revendications 1 à 5, comprenant en outre des latex ou des polymères hydrosolubles ou des combinaisons de ceux-ci.

7. Composition selon la revendication 6, dans laquelle les latex comprennent des latex styrène-butadiène, des latex carboxylatés styrène-butadiène, des latex styrène-acrylique, des latex acrylique, des latex isoprène ou des latex de caoutchouc naturel ou des combinaisons de ceux-ci.

8. Composition selon la revendication 6, dans laquelle les polymères hydrosolubles comprend des éthers cellulosiques, des acrylates, des polymères contenant de l'acide 2-acrylamido-2-méthylpropane sulfonique et des acrylamides, des polysaccharides, des alcools de polyvinyle ou des alcools de polyvinyle réticulé ou des combinaisons de ceux-ci.

9. Procédé destiné à la préparation d'une composition de cimentation de puits, comprenant :
(i) l'ajout d'un agent supprimant l'entraînement d'air à un fluide aqueux, l'agent comprenant un mélange de silicone et de polypropylène glycol, ou un silicone qui est fonctionnalisé avec des groupes éther ; ce qui permet de former un fluide de mélange ;
(ii) la combinaison du fluide de mélange avec un mélange solide comprenant du ciment de Portland dans un processus continu, ce qui permet de former une boue, dans lequel la composition de cimentation de puits comprend en outre des particules hydrophobes comprenant un ou plusieurs éléments sélectionnés dans la liste constituée de particules de caoutchouc, de polyamides, de polypropylène, de caoutchoucs acrylonitrile-butadiène, de polyéthylène, de styrène butadiène, d'uintahite, de caoutchouc styrène-isoprène-styrène (SIS), de copolymères styrène-isoprène, de caoutchouc styrène-butadiène-styrène (SBS), de styrène divinylbenzène, de fluoroélastomères, de perfluoroélastomères, de sulfure de polyphénylène, de polyéther-éthercétone, de dérivés de coke de pétrole et de charbon.

10. Procédé selon la revendication 9, dans lequel le mélange silicone/polypropylène glycol est présent à un rapport de poids entre 80 % silicone / 20 % polypropylène glycol et 20 % silicone / 80 % polypropylène glycol.

11. Procédé selon la revendication 9 ou 10, dans lequel le polypropylène glycol présente un poids moléculaire entre 1 000 g/mol et 4 000 g/mol.

12. Procédé selon l'une quelconque des revendications 9 à 11, dans lequel le mélange silicone/polypropylène glycol est présent à une concentration comprise entre 4 I/tonne de mélange et 40 I/tonne de mélange.

13. Procédé selon l'une quelconque des revendications 9 à 12, dans lequel le silicone fonctionnalisé est présent à une concentration comprise entre 2 I/tonne de mélange et 35 I/tonne de mélange.

14. Procédé selon l'une quelconque des revendications 9 à 13, dans lequel la composition comprend en outre des latex ou des polymères hydrosolubles ou des combinaisons de ceux-ci.
